(19) Europäisches Patentamt
European Patent Office
Office européen des brevets

(11) Publication number: 0 063 607
B1

(12) # EUROPEAN PATENT SPECIFICATION

(45) Date of publication of patent specification: 22.01.86

(51) Int. Cl.⁴: G 11 B 25/04

(21) Application number: 81902862.2

(22) Date of filing: 23.10.81

(86) International application number:
PCT/JP81/00297

(87) International publication number:
WO 82/01616 13.05.82 Gazette 82/12

(54) **MAGNETIC DISK DEVICE.**

(30) Priority: 29.10.80 JP 151571/80

(43) Date of publication of application:
03.11.82 Bulletin 82/44

(45) Publication of the grant of the patent:
22.01.86 Bulletin 86/04

(84) Designated Contracting States:
DE FR GB NL

(58) References cited:
FR-A-2 452 153
JP-A-50 139 708
JP-A-55 017 839
JP-U-48 103 011
JP-U-53 056 809
US-A-3 688 289
US-A-3 706 085

IBM Technical Disclosure Bulletin, Vol. 19, No. 11 (1977-4) H.G. Seifert (DISK STABILIZATION IN SELF-VENTILATED DISK PACKS) P. 4229

IBM Technical Disclosure Bulletin 1966-1981

(73) Proprietor: FUJITSU LIMITED
1015, Kamikodanaka Nakahara-ku
Kawasaki-shi Kanagawa 211 (JP)

(72) Inventor: MIZOSHITA, Yoshifumi
1-26-17, Azamino Midori-ku
Yokohama-shi Kanagawa 227 (JP)

(74) Representative: Muir, Ian R. et al
HASELTINE LAKE & CO. Hazlitt House 28
Southampton Buildings Chancery Lane
London WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a magnetic disk unit comprising a plurality of magnetic disks.

A typical magnetic disk unit comprises a plurality of magnetic recording disks, stacked coaxially with a predetermined axial spacing, and rotates them at a predetermined speed of rotation, and utilises magnetic heads associated with each magnetic recording disk for magnetic recording (data entry) and reproduction (data reading).

In such magnetic disk units, magnetic recording disks are mounted on a common spindle and are driven by the same driving source. One or more magnetic heads are provided for each magnetic recording surface of each magnetic recording disk and, like said disks, these magnetic heads move together because they are also driven by a common driving source. However, in such a magnetic disk unit there is provided only one sheet or surface of a magnetic recording disk for recording the positioning servo information for locating any magnetic head over a desired area on the corresponding magnetic recording surface of a magnetic recording disk. Therefore, for entry or reading of information to or from the desired area of a magnetic recording surface, one magnetic head reads the positioning servo information from the corresponding servo information magnetic recording disk surface and the writing or reading magnetic head is driven by the same driving source to the desired area determined by the servo information and positioned thereover.

Such a magnetic disk unit is required to have remarkable accuracy for positioning the magnetic head over the desired disk area.

Realizing high accuracy of positioning is a problem and especially if the recording surface of the magnetic recording disk recording the servo information and the recording surface of the other magnetic recording disks used for ordinary data entry and reading are in different corresponding relationships.

If the recording surface of the magnetic recording disk containing the servo information and the recording surface of the magnetic recording disk for ordinary data entry and reading are in different corresponding relationships when the magnetic head is to be positioned so as to enter/read the data to/from the desired area of the magnetic disk, the magnetic head will not be accurately positioned at the desired recording surface even if the magnetic head is positioned accurately at the recording surface of the magnetic disk recording the servo information. This problem results, to a considerable degree, from the existence of temperature differences between the magnetic recording disks.

In other words, since existing magnetic recording disks often use aluminium as a base material, differences of thermal expansion in the disks due to the temperature differences are the principal cause of inaccuracy of positioning.

Therefore, in some existing magnetic disk units to try to achieve equal temperature distribution, in a plurality of magnetic disks within the shroud, air is circulated within said shroud by the centrifugal force generated due to the rotation of said magnetic recording disks.

Namely, in such a prior disk structure, air is input from the area or region near the spindle mounting of the magnetic recording disks and released between respective magnetic recording disks.

In the magnetic disk system disclosed in U.S. Patent 3,688,289 there are two groups of disks mounted one above the other on a spindle, air being introduced near the spindle mounting at the upper end for the upper group of disks and at the lower end for the lower group of disks.

However, all such prior existing air circulating systems have still suffered the disadvantage that the temperature differences are not completely equalized.

The present invention seeks to provide a magnetic disk unit in which the temperature difference between respective magnetic recording disks are reduced so as to correspondingly reduce the difference of thermal expansion between respective magnetic recording disks.

According to the present invention there is provided a magnetic disk unit comprising a plurality of magnetic disks positioned spaced from one another on a disk mounting structure that is rotatably mounted on a spindle, with ventilation holes to allow cooling air circulated by the centrifugal force generated by the rotation of the disk to pass outwardly between the disks from a region near the spindle and with cooling air openings at opposite spindle ends of the mounting structure to allow cooling air to pass to the region or regions near the spindle, characterised in that separate air pathways are arranged in the mounting structure from each opening and via separate parts of said region such that the air from each opening is fed to all the separating spaces between the disks whereby cooling air from said opposite end openings is mixed in the spaces between disks.

For a better understanding of the present invention reference will now be made, by way of example, to the accompanying drawings in which

Figure 1 shows the concept of the kind of magnetic disk unit with which the present invention is concerned;

Figure 2 shows an example of an existing magnetic disk unit;

Figure 3 shows a sectional view of one embodiment of a magnetic disk unit in accordance with the present invention;

Figure 4A shows temperature measuring points between magnetic recording disks of the magnetic disk of Fig. 3;

Figure 4B shows the results of the temperature measurements;

Figure 5 is a sectional view of a second embodiment of a magnetic disk unit in accordance with the present invention; and

Figure 6 shows a spacer for holding apart the magnetic recording disks of the arrangement of Fig. 3.

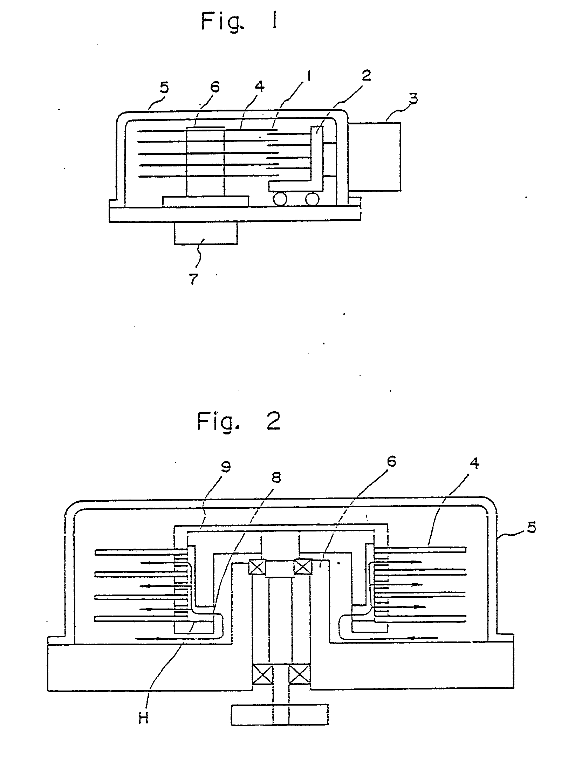

As shown in Fig. 1, a presently known magnetic disk unit comprises a plurality of magnetic heads 1 mounted on a common movable support, called the carriage 2, and thereby the magnetic heads are moved to the desired area on magnetic recording disks 4 by a solenoid-controlled device such as a voice coil motor 3 or hydraulic motor. 5 is a cover for the unit, 6 is a spindle on which the disks 4 are rotatably mounted and 7 is a common driver for rotating all the disks.

Recently, however, the requirement to achieve a large storage capacity with such a unit has inevitably led to the use of very narrow track widths for recording data resulting in the need for greater positioning accuracy of the magnetic heads 1 than previously. A notable factor in limiting this positioning accuracy is relative positional deviation between respective heads 1 and the scanned disks areas resulting from differences of thermal expansion generated within the magnetic disk unit, particularly due to temperature differences in the spaces between the magnetic recording disks 4.

As a method of diminishing such temperature difference, it is known, as shown in Fig. 2, to circulate air by providing a ventilating hole H which extends from the area near the center of spindle 6 to the spaces formed between the magnetic recording disks 4 through the magnetic recording disk mounting member 9. In Fig. 2, the magnetic head access mechanism has been deleted for simplification. Thereby temperature differences in the radius direction in the space between magnetic recording disks 4 are very greatly reduced but the temperature differences in the vertical direction (in the direction in which the magnetic recording disks 4 are stacked) are still signnificant.

A reason for this is that air inlet 8 is provided at one end near the center of the spindle 6, and as a result, the air circulation system within the magnetic disk unit becomes asymmetrical in the vertical direction so that a temperature difference is generated in the space between the magnetic disks 4 in the stacking direction. Also, even in the arrangement disclosed in U.S. Patent 3,688,289 where air inlets are provided at two ends in the upper and lower portions, the layout does not bring about sufficient even circulation of air. This is because the air circulation system is divided into two portions in the vertical direction in the center of the stacking direction of the magnetic disks.

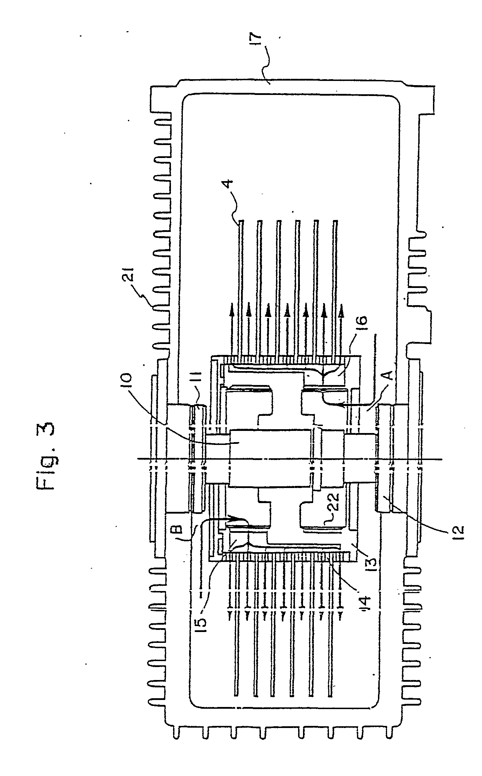

An embodiment of a magnetic disk unit in accordance with the present invention will now be explained with reference to Fig. 3.

In this figure, the magnetic disk unit employs a so-called double-supported type spindle 10 which is supported at both upper and lower ends by bearings 11 and 12. Again in this figure, the magnetic head access mechanism has been omitted for simplification. Magnetic recording disks 4 are mounted on the spindle 10 on a hub or mounting member 13, the disks being spaced at equal intervals by means of spacers 14 which are provided with ventilating holes. A lower space A, near the spindle, is connected to the spaces between the magnetic disks 4 via an opening or ventilating hole 16 in the hub 13 and the holes in the spacers 14 and, therefore, air from the space A under the hub 13 is drawn in through rotation of the magnetic disks 4 and flows outwardly towards the circumferences of the disks 4. In the same way, a ventilating hole 5 forms part of an air connection to the spaces between the disks 4 from a space B at the upper portion of the hub 13, near the spindle, and, therefore, air is drawn from the space B by rotation of the magnetic disks 4 and flows outwardly towards the circumferences of the disks 4. The two kinds of ventilating holes 15, 16 which are alternately provided at the circumference of the hub 13 as explained above allow inflow of air both from the upper portion of the disks 4 and the lower portion of disks 4 into the same spaces formed between said disks 4 where the air is uniformly mixed. The magnetic disk unit is housed in a case 17.

In the above-described embodiment, the magnetic disk unit consists of six disks 4 of 10″ (25 cm) diameter and is encased in the aluminium case 17 having a thickness of 10 mm, an outer diameter of 400 mm and a height of 150 mm. For a temperature test the magnetic disks were rotated at a rate of 4000 rpm.

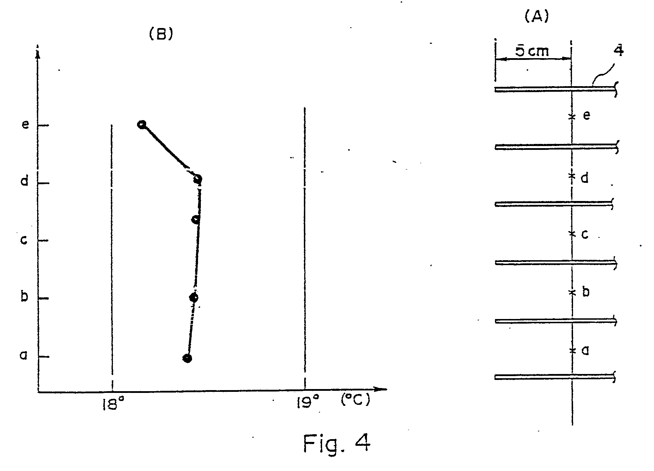

For the temperature test, Fig. 4(B) shows a plot of the height of the disks 4 on the vertical axis against temperature on the horizontal axis. As can be seen a rather uniform temperature with a fluctuation of temperature under one degree was obtained at each measuring point of a, b, c, d and e in the space between the disks 4. A fluctuation of one degree resulting in a mistrack of about 3 μm is generated and a temperature difference of more than two degrees is not allowed for a magnetic disk unit utilising high recording density.

As explained above, the two kinds of air ventilating holes 15, 16 provided alternately at the circumference of hub 13 assures that the air inflowing from the upper and lower portions of the disks are mixed in the same spaces between all the disks, such that each space between the disks is at almost the same temperature and the relative positional displacement between the heads generated by temperature difference is reduced. This means that the existing information track width can be narrowed so as to realize a magnetic disk unit with greater storage capacity.

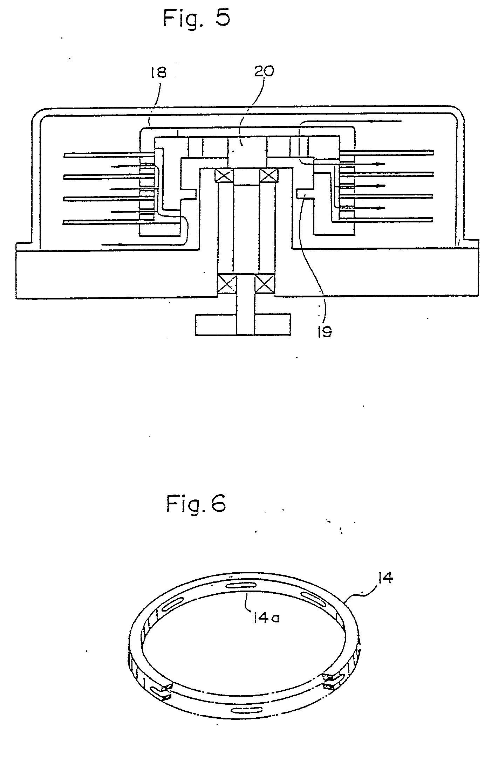

Explained above is an embodiment of the present invention with a magnetic disk unit utilizing a double-supported type spindle, but the present invention can also provide the same effect when adopted in a magnetic disk unit utilizing a single-supported spindle as shown in Fig. 5. In this figure, the projection portion 19 is provided at the inside center of hub 18 in order to vertically isolating or separate the space adjacent the spindle 20 and hub 18 into two regions similar in function to the separate regions (A, 16) and (B, 15) in Fig. 3.

The two separate air paths from the upper and lower spindle ends of the stack of disks are clearly shown on the drawing, the upper path extending through a hole or opening in hub 18 and the lower path extending from the open lower end of the hub.

The magnetic disk structure of Fig. 3 further comprises a case 17 provided with heat radiating fins provided to effect cooling of the inside of magnetic disk unit.

Also, the inner part of the magnetic disk mounting member (hub) 13 which forms part of the air circulating path is provided with a filter 22 which cleans the air within the case while the air is circulating.

Figure 6 shows the practical structure of the spacer 14 used in Fig. 3 and Fig. 5.

This spacer 14 is provided with holes 14a at predetermined intervals as shown in the figure and the air is drawn therethrough into the space between the magnetic disks 4.

As shown in Fig. 4, the temperature at the point e of the measuring points between the magnetic recording disks 4 deviates most from that of the other points.

Even so, the temperature difference is less than 0.5 degree and does not give any adverse effect on the practical operation of the measured unit but it is apparent that, if the advent of a magnetic disk unit having a further higher recording density requires further reduction of this temperature difference, it can be improved by controlling the amount of outflow of air by changing the diameter of air ventilation holes 14a bored in said spacer 14.

The present invention has been described above with reference to two preferred embodiments and provides a magnetic disk unit assuring small relative positional deviation between heads and scanned areas and high with recording density by allowing a narrow track width. This is achieved through a structure wherein one or more air ventilating holes or openings are provided in the hub and respectively extend to the spaces between magnetic disks from both upper and lower portions near the center of the spindle so that the air in the spaces near both upper and lower portions of the spindle is mixed in the spaces between magnetic disks to keep the temperature differences in the vertical stacking direction in the space between magnetic disks acceptably low.

In the above explanation, emphasis is placed on the fact that the thermal expansion of the magnetic recording disks can be equalized, but this equalizing effect is also obtained on the arm etc. for making access of the magnetic heads.

**Claims**

1. A magnetic disk unit comprising a plurality of magnetic disks (4) positioned spaced from one another on a disk mounting structure (13, 18) that is rotatably mounted on a spindle (10, 20), with ventilation holes (14) to allow cooling air circulated by the centrifugal force generated by the rotation of the disk to pass outwardly between the disks from a region near the spindle and with cooling air openings (A, B) at opposite spindle ends of the mounting structure to allow cooling air to pass to the region or regions near the spindle, characterised in that separate air pathways are arranged in the mounting structure from each opening (A, B) and via separate parts of said region such that the air from each opening (A, B) is fed to all the separating spaces between the disks whereby cooling air from said opposite end openings is mixed in the spaces between disks.

2. A magnetic disk unit according to claim 1 wherein said magnetic disks and mounting structure are encased in a case (17) and the outer surface of the case (17) is provided with cooling fins (21).

3. A magnetic disk unit according to claim 1 or 2 wherein said mounting structure (13, 18) is provided with a filter arrangement (22) to filter the cooling air before it passes through the ventilation holes (14).

**Patentansprüche**

1. Magnetplatteneinheit mit einer Vielzahl von magnetischen Platten (4), die mit Abstand voneinander auf einer Plattentragstruktur (13, 18) angeordnet sind, die auf einer Spindel (10, 20) rotierbar ist, mit Ventilationslöchern (14), um durch Zentrifugalkraft, die durch die Rotation der Scheibe erzeugt wird, zierkulierte Kühlluft zwischen den Platten von einem Bereich nahe der Spindel nach außen treten zu lassen, und mit Kühlluftöffnungen (A, B) an entgegengesetzten Spindelenden der Tragstruktur, um die Kühlluft zu dem Bereich oder den Bereichen nahe der Spindel hindurchtreten zu lassen, dadurch gekennzeichnet, daß separate Luftwege in der Tragstruktur von jeder Öffnung (A, B) und durch separate Teile des genannten Bereichs angeordnet sind, so daß die Luft von jeder Öffnung (A, B) zu allen trennenden Zwischenräumen zwischen den Platten zugeführt wird, wo durch die Kühlluft von entgegengesetzten Endöffnungen in den Räumen zwischen den Platten gemischt wird.

2. Magnetplatteneinheit nach Anspruch 1, bei welcher die genannten Magnetplatten und die Tragstruktur in einem Gehäuse (17) eingeschlossen sind und die äußere Oberfläche des Gehäuses (17) Kühlrippen (21) aufweist.

3. Magnetplatteneinheit nach Anspruch 1 oder 2, bei welcher die Tragstruktur (13, 18) eine Filteranordnung (22) aufweist, um die Kühlluft zu filtern, bevor sie durch die Ventilationslöcher (14) hindurchtritt.

**Revendications**

1. Unité de disques magnétiques comprenant plusieurs disques magnétiques (4) placés à intervalles les uns des autres sur une structure (13, 18) de montage de disque qui est montée rotative sur un arbre (10, 20), des trous de ventilation (14) autorisant que de l'air de refroidissement mis en circulation par la force centrifuge créée par la rotation du disque passe à l'extérieur entre les disques depuis une région voisine de l'arbre, et des ouvertures (A, B) d'air de refroidissement situées aux extrémités opposées de l'arbre de la structure de montage permettant que l'air de refroidissement parvienne jusqu'à la région, ou aux régions, du voisinage de l'arbre, caractérisée en ce que des trajets d'air distincts sont prévus dans la structure de montage en provenance de chaque ouverture (A, B) et via des parties distinctes de ladite région de façon que l'air venant de chaque ouverture (A, B) soit délivré à tous les espaces de séparation formés entre les disques, si bien que l'air de refroidissement venant desdites ouvertures des extrémités opposées se mélange dans les espaces formés entre les disques.

2. Unité de disques magnétiques selon la revendication 1, où lesdits disques magnétiques et la structure de montage sont enfermés dans un boîtier (17), et la surface externe du boîtier (17) est dotée d'ailettes de refroidissement (21).

3. Unité de disques magnétiques selon la revendication 1 ou 2, où ladite structure de montage (13, 18) est dotée d'un dispositif de filtrage (22) servant à filtrer l'air de refroidissement avant qu'il ne passe dans les trous de ventilation (14).

Fig. 1

5
6
4
1
2
3
7

Fig. 2

9
8
6
4
5
H

17
4
21
16
10
11
A
22
12
B
13
14
15

Fig. 3

(B)
e
d
c
b
a
18°
19°
(°C)

(A)
5cm
4
e
d
c
b
a

Fig. 4

Fig. 5

18
20
19

Fig. 6

14
14a